# EUROPÄISCHE PATENTANMELDUNG

(11) **EP 1 890 066 A2**
(43) Veröffentlichungstag der Anmeldung: **20.02.2008**
(21) Anmeldenummer: 07015240.0
(22) Anmeldetag: 03.08.2007
(51) Int. Cl.: F16L 9/12

(54) **Mehrschichtiges Rohr**

(30) Priorität: 16.08.2006 DE 202006012608 U
(71) Anmelder: REHAU AG + Co, 95111 Rehau (DE)
(72) Erfinder: Stadthalter, Peter, 96152 Burghaslach (DE)

(57) **Zusammenfassung**

Das Rohr gemäß der vorliegenden Erfindung aus zumindest zwei koaxialen, untrennbar miteinander verbundenen Schichten, die thermoplastische Werkstoffe enthalten, jedoch unterschiedliche Eigenschaften aufweisen, wobei die äußerste Schicht eine andere Färbung aufweist, als die ihr benachbarte Schicht, zeichnet sich dadurch aus, dass die Schichtdicke der äußersten Schicht kleiner als die maximal zulässige Kerbtiefe des Rohres.

## Beschreibung

Die Erfindung betrifft Rohre, insbesondere mehrschichtige Rohre, gemäß dem Oberbegriff des Anspruches 1, aus zumindest zwei koaxial, untrennbar miteinander verbundenen Schichten.

Bekannt sind bereits verschiedene mehrschichtige Rohre, die gegenüber insbesondere einschichtigen Rohren gewisse Vorteile aufweisen.

Aus der EP 0869304 sind mehrschichtige Rohre bekannt, die aus einem Rundrohr, aus einem Polyethylen und einer Außenschicht aus einem vernetzten Polyethylen bestehen. Diese Rohre sollen auf ökonomische Weise eine besondere Widerstandsfähigkeit gegen äußere mechanische Belastungen aufweisen. Durch die Vernetzung des Materials der Außenschicht soll die Kerbempfindlichkeit der Rohre herabgesetzt werden, um auf diese Weise die Verschleißfestigkeit zu erhöhen und dadurch die Eignung für beispielsweise die grabenlose Verlegetechnik zu verbessern. Die dünne und kostengünstige Außenschicht aus vernetztem Polyethylen soll auch für erheblich verbessertes Abriebverhalten und höhere Punktlastbeständigkeiten sorgen, wodurch grabenlose Verlegetechniken und sandbettfreie Verlegungen mit der damit verbundenen Gefahr von Punktlasten ermöglicht werden sollen.

Die DE 20010111 U1 beschreibt mehrschichtige Rohre mit insgesamt drei Schichten, bei denen das Grundrohr ebenfalls als Polyethylen und sowohl die Innen- als auch die Außenschicht aus einem Polyethylen mit erhöhter Spannungsrissbeständigkeit bestehen.
Dieses Rohr ist bei entsprechender Wahl des Innenschichtmaterials beständig gegenüber äußeren Punktlasten, seine Beständigkeit gegenüber dem Wachstum von bei Transport oder Verlegung eingebrachten Kerben, ist jedoch geringer, insbesondere wenn die Kerben tiefer sind, als die Außenschicht dick ist.

In der EP 1286832 ist ein weiteres mehrschichtiges Rohr beschrieben, welches jedoch, wie alle anderen Rohre im Stand der Technik, insbesondere durch Fertigungstoleranzen eine unterschiedliche Schichtdicke aufweist.

Somit kann die äußere Schicht von der in der Norm definierten zulässigen Risstiefe sowohl radial als auch axial abweichen, so dass möglicherweise mehrschichtige Rohre verlegt bzw benutzt werden, die bereits vorgeschädigt sind, da beispielsweise beim Transport bzw. auch bei der Verlegung eingebrachte Risse bzw. Kerben größer sind, als die zulässige Risstiefe.

Die Erfindung stellt sich die Aufgabe, ein gattungsgemäßes Rohr aufzuzeigen, das gegenüber dem Stand der Technik ein nochmals verbessertes mechanisches Verhalten, insbesondere ein ausgewogenes Verhältnis der Beständigkeit des Rohres gegenüber äußeren Punktlasten sowie äußeren Kerben und Rissen aufweist, das ein verbessertes Abriebverhalten und/oder die Möglichkeit der Sperrwirkung gegenüber Bodenschadstoffen aufweist und es ermöglicht, den Grad möglicher äußerer Beschädigungen visuell zu erkennen bzw zu beurteilen.

Erfindungsgemäß wird dies durch ein Rohr gemäß der kennzeichnenden Merkmale des Anspruches 1 gelöst.
Weitere vorteilhafte Ausgestaltungen sind in den Unteransprüchen aufgeführt.

Das erfindungsgemäße Rohr zeichnet sich dadurch aus, dass die Schichtdicke der äußersten Schicht kleiner als die maximal zulässige Kerbtiefe des Rohres ist.

Durch diese vorteilhafte Ausgestaltung des erfindungsgemäßen Rohres besteht jederzeit die Möglichkeit einer visuellen Kontrolle bzw. Beurteilung möglicherweise am Rohr vorhandener Beschädigungen, die im Vergleich zu einer normativen maximal zulässigen Beschädigung vor allem beim Einsatz grabenloser Verlegetechniken von unschätzbarem Vorteil sind.

Es hat sich als vorteilhaft herausgestellt, dass bei dem erfindungsgemäßen Rohr die Schichtdicke der äußeren Schicht 0,1 bis 0,3 mm, bevorzugt 0,15 bis 0,25 mm entspricht, so dass insbesondere beim Verschweißen von Rohrenden über das Heizwendelschweißverfahren ein leichtes Erkennen der ordnungsgemäß durchgeführten Schweißvorbereitung dieser Schicht möglich ist.
Es hat sich weiterhin als vorteilhaft herausgestellt, dass bei dem erfindungsgemäßen Rohr das Verhältnis der summierten Schichtdicken der äußersten Schicht und der dieser benachbarten Schicht zur zulässigen Kerbtiefe des Rohres maximal 0,9 beträgt.

Somit ist die maximal zulässige Kerbtiefe des erfindungsgemäßen Rohres deutlich erhöht, so dass die visuelle Kontrolle und Beurteilung der am Rohr vorhandenen Beschädigungen jederzeit eine zuverlässige und prüfmittelfreie Aussage lässt, ohne die Gefahr fertigungsbedingter Schichtdickenschwankungen und damit verbundener größerer Rohrschädigungen zu realisieren.
In einer weiteren vorteilhaften Ausgestaltung ist das erfindungsgemäße Rohr aus insbesondere Schichten mit unterschiedlicher Einfärbung gebildet, so dass die Möglichkeit zur visuellen Kontrolle bzw. Beurteilung möglicher am Rohr vorhandener Beschädigungen/Kerben sehr einfach möglich ist. Dabei kann die Dicke der äußersten Schicht und der dieser benachbarten Schicht in etwa der maximal zulässigen Kerbtiefe für ein mehrschichtiges Rohr entsprechen abzüglich einer Sicherheitsreserve von bspw. 10%.

Bei den erfindungsgemäßen Rohren ist die maximal zulässige Kerbtiefe gegenüber Standardrohren beispielsweise nach den EN 12201 deutlich erhöht. Durch die entsprechend dick ausgebildete farbige Außenschicht, die maßlich integriert ist, ist die visuelle Begutachtung der insbesondere nach einer grabenlosen Verlegung tatsächlich vorhandenen Beschädigungen ohne zusätzliche Hilfsmittel möglich. Weiterhin ist die zulässige Kerbtiefe der erfindungsgemäßen Rohre sehr hoch, so dass eine zusätzliche Sicherheitsreserve bei der Dimensionierung und Verlegung der erfindungsgemäßen Rohre realisierbar ist, indem beispielsweise die Dicke der Außenschicht gegenüber der maximal zulässigen Kerbtiefe etwas geringer ausgebildet ist.

Ein weiterer Vorteil der erfindungsgemäßen Rohre wird darin gesehen, dass bestimmte, die Eigenschaften des erfindungsgemäßen Rohres verbessernde Beimischungen beispielsweise nur in der äußersten Schicht bzw. in der dieser benachbarten Schicht eingebracht werden können, so dass die Hauptschicht aus kostengünstigeren Materialien herstellbar ist. Weiterhin können durch die Verwendung einheitlicher, kostengünstiger bzw. zugelassener Materialien für verschiedene Anwendungsbereiche wie z. B. im Trinkwasserbereich, im Abwasserbereich bzw. bei Gasrohren die Herstellungskosten noch einmal reduziert werden.

Neben diesen technischen Vorteilen hat das erfindungsgemäße Rohr noch einen weiteren Vorteil; die Zulassung von beispielsweise Druckrohren in verschiedenen Ländern ist trotz internationaler Harmonisierung und Normung immer noch sehr zeit- und kostenaufwändig.

Dadurch, dass das erfindungsgemäße Rohr und die bevorzugten Ausführungsformen auf an sich genormten Rohren basieren, welche eine oder zwei zusätzliche Außenschichten aufweisen, können die Aufwendungen für die Zulassung von beispielsweise Druckrohren erheblich reduziert werden.

Bei den erfindungsgemäßen Ausführungsformen des erfindungsgemäßen Rohres können zwischen den vorhandenen Schichten an sich bekannte Haftvermittlerschichten eingebracht sein, welche die Verbindung zwischen den einzelnen Schichten entsprechend optimieren.

Auch eine zusätzliche optische Gestaltung der Oberfläche der erfindungsgemäßen Rohre wie z.B. Farbstreifen, Farbringe und dergleichen sind mit beinhaltet. Das erfindungsgemäße Rohr weist je nach den technischen Anforderungen des Verwendungsfalls Beimischungen eines farbgebenden Zuschlagsstoffes bzw. wenigstens eines die Diffusionsbeständigkeit erhöhenden Zuschlagsstoffes auf. Diese Beimischungen können in den jeweils erforderlichen Schichten des erfindungsgemäßen Rohres eingebracht sein.

In einer weiteren vorteilhaften Ausgestaltungsform weisen die erfindungsgemäßen Rohre Beimischungen wenigstens eines, die mechanische Beständigkeit erhöhenden, Zuschlagsstoffes auf, welcher beispielsweise als Schichtsilikat und dgl. ausgebildet ist.

In einer weiteren, ebenfalls vorteilhaften Ausgestaltung des erfindungsgemäßen Rohres besteht die äußerste Schicht und/oder die dieser benachbarte Schicht aus einem Material mit erhöhter Spannungsrissbeständigkeit, so dass die für diese Rohre maximal zulässigen Kerbtiefen erhöht sind.

Bei einer weiteren vorteilhaften Ausgestaltung der erfindungsgemäßen Rohre ist das Material wenigsten einer der koaxial, untrennbar miteinander verbundenen, Schichten mit einer Beimischung wenigstens eines antistatisch wirkenden Zuschlagsstoffes beaufschlagt, wobei der Oberflächenwiderstand dieser entsprechenden Schicht höchstens 10⁻¹⁰ Ohm/cm beträgt.
Dies ist besonders vorteilhaft bei Rohren, die für den Einsatz im Bergbau bspw. Untertage vorgesehen sind.

In einer ebenfalls vorteilhaften Ausgestaltung der erfindungsgemäßen Rohre weist das Material wenigstens eine der koaxial, untrennbar miteinander verbundenen, Schichten wenigstens einen elektrisch leitfähig eingestellten Zuschlagsstoff auf, wobei der Oberflächenwiderstand dieser betreffenden Schicht höchstens 10⁻⁶ Ohm/cm beträgt. Dies ist insbesondere vorteilhaft für Rohre, bei deren Einsatz elektrostatische Felder aufgebaut werden können, die möglicherweise zu Staubexplosionen führen.

Im Folgenden soll die Erfindung an diesen nicht einschränkenden Ausführungsbeispielen beschrieben werden.

Ein erfindungsgemäßes Rohr besteht aus einer äußersten Schicht aus beispielsweise einem gelb eingefärbten Polyethylen (PE) 100 und weist etwa 20 % der Nennwanddicke dieses Rohres auf. Dieser äußersten Schicht benachbart ist eine zweite Schicht aus einem PE 100 angeordnet, welches beispielsweise schwarz eingefärbt ist und ca. 80 % der Nennwanddicke des mehrschichtigen Rohres beträgt. Im Inneren des mehrschichtigen Rohres ist eine zusätzliche dritte Schicht angeordnet, die ebenfalls aus einem PE HD besteht und die eine Beimischung sowohl eines die Diffusionsbeständigkeit als auch zusätzlich eine die mechanische Beständigkeit erhöhenden Zuschlagsstoffes im Bereich von 1 bis 10 % aufweist.

In einem weiteren Ausführungsbeispiel besteht die äußerste Schicht des mehrschichtigen Rohres aus einem beispielsweise blau eingefärbten PE in eine Dicke von ca 0,2 mm und einer an dieser benachbarten Schicht aus einem ebenfalls PE 100 beispielsweise in der Farbe braun, welche etwa 20 % der Nennwanddicke des mehrschichtigen Rohres umfasst abzüglich der 0,2 mm der äußersten Schicht. An diese beiden Schichten folgend ins Innere des Rohres ist eine weitere Schicht aus einem beispielsweise schwarz eingefärbten PE 100 RC angeordnet, die etwa 60 % der Nennwanddicke des mehrschichtigen Rohres beträgt. Im Inneren des Rohres ist an die schwarze PE 100 RC-Schicht eine zusätzliche maßlich aufaddierte Innenschicht angeordnet, die aus einem Material mit erhöhter Spannungsrissbeständigkeit besteht und eine Beimischung wenigstens eines, die Abriebfestigkeit erhöhenden, Zuschlagstoffes im Bereich von 1 bis 10 % aufweist.

## Patentansprüche

1. Rohr aus zumindest zwei koaxialen, untrennbar miteinander verbundenen Schichten, die thermoplastische Werkstoffe enthalten, jedoch unterschiedliche Eigenschaften aufweisen, wobei die äußerste Schicht eine andere Färbung aufweist, als die ihr benachbarte Schicht, **dadurch gekennzeichnet, dass** die Schichtdicke der äußersten Schicht kleiner als die maximal zulässige Kerbtiefe des Rohres ist.

2. Rohr nach Anspruch 1, **dadurch gekennzeichnet, dass** das Verhältnis der Schichtdicke der äußersten Schicht zur zulässigen Kerbtiefe des Rohres maximal 0,9 beträgt.

3. Rohr nach Anspruch 1 bis 2, **dadurch gekennzeichnet, dass** wenigstens eine der koaxialen, untrennbar miteinander verbundenen Schichten des Rohres eine Beimischung wenigstens eines die UV-Beständigkeit erhöhenden Zuschlagsstoffes aufweist.

4. Rohr nach Anspruch 1 bis 3, **dadurch gekennzeichnet, dass** wenigstens eine der koaxialen, untrennbar miteinander verbundenen Schichten des Rohres eine Beimischung wenigstens eines farbgebenden Zuschlagsstoffes aufweist.

5. Rohr nach Anspruch 1 bis 4, **dadurch gekennzeichnet, dass** wenigstens eine der koaxialen, untrennbar miteinander verbundenen Schichten des Rohres eine Beimischung wenigstens eines die Diffusionsbeständigkeit erhöhenden Zuschlagsstoffes aufweist.

6. Rohr nach Anspruch 1 bis 5, **dadurch gekennzeichnet, dass** wenigstens eine der koaxialen, untrennbar miteinander verbundenen Schichten des Rohres eine Beimischung wenigstens eines die mechanische Beständigkeit erhöhenden Zuschlagsstoffes aufweist.

7. Rohr nach Anspruch 1 bis 6, **dadurch gekennzeichnet, dass** die äußerste Schicht des Rohres an ihrer Außenseite Farbstreifen aufweist.

8. Rohr nach einem der vorhergehenden Ansprüche, **dadurch gekennzeichnet, dass** die äußerste Schicht und/oder die dieser benachbarte Schicht aus einem Material mit erhöhter Spannungsrissbeständigkeit besteht.

9. Rohr nach Anspruch 1 bis 7, **dadurch gekennzeichnet, dass** wenigstens eine der koaxialen, untrennbar miteinander verbundenen Schichten des Rohres eine Beimischung wenigstens eines antistatisch wirkenden Zuschlagsstoffes aufweist, wobei der Oberflächenwiderstand der Schicht höchstens 10⁻¹⁰ Ohm/cm beträgt.

10. Rohr nach Anspruch 1 bis 8, **dadurch gekennzeichnet, dass** wenigstens eine der koaxialen, untrennbar miteinander verbundenen Schichten des Rohres eine Beimischung wenigstens eines elektrisch leitfähig eingestellten Zuschlagsstoffes aufweist, wobei der Oberflächenwiderstand der Schicht höchstens 10⁻⁶ Ohm/cm beträgt.
